# EUROPEAN PATENT SPECIFICATION

(11) **EP 2 244 889 B1**
(45) Date of publication and mention of the grant of the patent: **02.08.2017**
(21) Application number: 09705479.5
(22) Date of filing: 30.01.2009
(51) Int. Cl.: B44D 3/10, B07B 1/06, B01D 29/085

(54) **HOLDER FOR A PAINTSTRAINER AND USE OF A PAINTSTRAINER**
HALTER FÜR EIN FARBFILTER UND VERWENDUNG EINES FARBFILTERS
SUPPORT POUR UN FILTRE POUR PEINTURE ET UTILISATION D'UN FILTRE POUR PEINTURE

(30) Priority: 30.01.2008 NL 2001240
(43) Date of publication of application: 03.11.2010
(73) Proprietor: E.M.M. International B.V., 8013 PE Zwolle (NL)
(72) Inventor: BROERS, Menno Arjan, NL-3821 CB Amersfoort (NL)
(74) Representative: V.O.
(86) International application number: PCT/NL2009/050046
(87) International publication number: WO 2009/096790

(56) References cited:
- EP-A- 1 479 531
- WO-A-03/065858
- DE-A1- 2 217 341
- FR-A- 366 781
- FR-A- 1 291 877
- GB-A- 444 288
- GB-A- 191 220 122
- US-A- 2 883 057
- US-A- 4 946 591

## Description

The invention relates to a paintstrainer holder and the use of a paint strainer.

A pot shaped coffee strainer is known from DE 22 17 341, which comprises a frustoconical top part and a lower part formed as sieve basked of perforated metal foil.

A support for a strainer for gravy and the like is known from GB 20 122, which has been filed 4^{th} Sept. 1912, wherein the support comprises a horizontal ring attached to a vertical descending leg provided with a lever to firmly clamp the support onto the side of a pan or the like.

A holder for a paint strainer is known from, *inter alia*, Dutch patent application NL1022980. There, a paint strainer is described having a conical form, in use, with the lowest part with point comprising the strainer part. During use, the paint strainer is placed in a holder. This holder has a frustoconical shape, whose inlet and outlet ends are open. The strainer bears against the inside of the holder, while the straining part projects completely or partly through the open outlet end.

For holding the holder with strainer over a paint cup, a support is provided. The support is designed for holding the holder and the paint cup, while the lower edge of the holder can be held at some distance from the cup above the cup so that the point of the strainer part does not project into the paint during filling of the cup via the strainer.

The document US-A-4946591 discloses a paintstrainer holder according to the preamble of claim 1, and a use of a paintstrainer.

The object of the invention is to provide an alternative or improved paintstrainer holder.

This object is achieved with a paintstrainer holder according to claim 1, which paintstrainer holder comprises an inlet opening and an outlet opening, wherein a feed-through direction extends from the inlet opening to the outlet opening, while the holder is provided, adjacent the outlet opening, with a lower edge, which lower edge is provided with a supporting edge at an angle to the feed-through direction, which supporting edge is designed for bearing, in use, on an edge of a receptacle for the material to be strained, which lower edge is also provided with a collar edge extending away from the inlet opening at an angle to the supporting edge and at the outside of the supporting edge, wherein the holder substantially comprises a frustoconical form, and, at the location of the truncation, merges into the lower edge.

By providing the holder with a supporting edge, the holder with strainer can be placed directly on a receptacle, without the necessity of a separate support for holding the holder over the receptacle. As the collar edge can be suspended above the receptacle to some extent, it can contribute to the stability of the holder relative to the receptacle. Also disclosed is the use of a strainer for filling a receptacle with a liquid to be strained, wherein the strainer is placed in a holder, while the holder is placed directly on the receptacle, with a supporting edge of the holder bearing on an edge of the receptacle and a collar edge extending over a part of the outside of the receptacle.

Further embodiments, effects and features of the present invention follow from the following specification, in which the invention is described in several exemplary embodiments on the basis of the appended drawings. In the drawings:
Fig. 1A schematically shows a cross section of an assembly of a holder with strainer in front view;
Fig. 1B schematically shows a cross section of an assembly of a holder with strainer in side view;
Fig. 1C schematically shows a detailed representation of the bottom side of the assembly of Fig. 1A;
Fig. 2 shows an assembly of a strainer, paint sprayer gun, paint cup, holder and strainer;
Fig. 3 shows a view in perspective of a holder, viewed somewhat obliquely from above;
Fig. 4 shows a view in perspective of a holder, viewed somewhat obliquely from below;
Fig. 5 schematically shows a cross section in front view of a detail of a holder on a receptacle;
Figs. 6A and 6B schematically show cross sections of different holders;
Fig. 7 schematically shows a cross section of a holder in front view.

In this specification, identical or corresponding parts have identical or corresponding reference numerals. In the drawing, embodiments are shown merely by way of example. The elements used therewith are only mentioned as example and should not be construed to be limitative in any manner. Other parts too can be used within the framework of the present invention. The proportions of the embodiments shown in the Figures are often represented in a schematic and/or exaggerated manner and should not be taken to be limitative in any manner, unless mentioned otherwise.

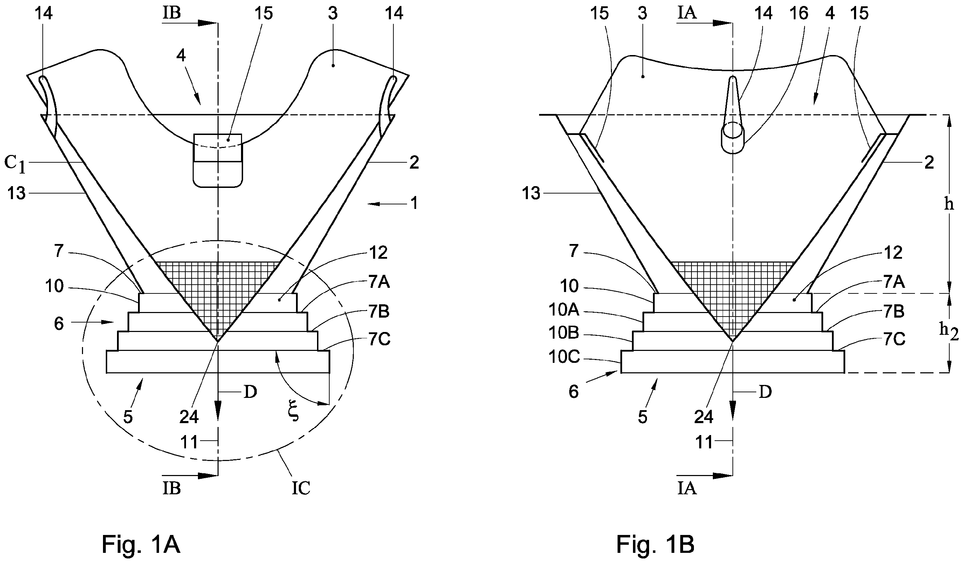

Figs. 1A-C shows cross sections of an assembly 1 of a paintstrainer holder 2 with a paintstrainer 3 for paint to be strained. The strainer 3 can be a separate paint strainer known per se from, for instance, NL1022980. In one embodiment, the form of the outside of the strainer 3, at least in operative condition, corresponds substantially to the form of the inside of the holder 2.

The holder 2 is provided with an inlet opening 4 and an outlet opening 5, with a feed-through direction D for the paint extending from the inlet opening 4 to the outlet opening 5. With the holder in use, the feed-through direction D can extend approximately in vertical direction, i.e. the direction of the flow of the paint. As can be seen, the holder 2 can substantially comprise a rotational form, with the feed-through direction D corresponding to the axis of rotation 11 of the rotational form. In Figs. 1A-C, the axis of rotation is indicated in a dotted line.

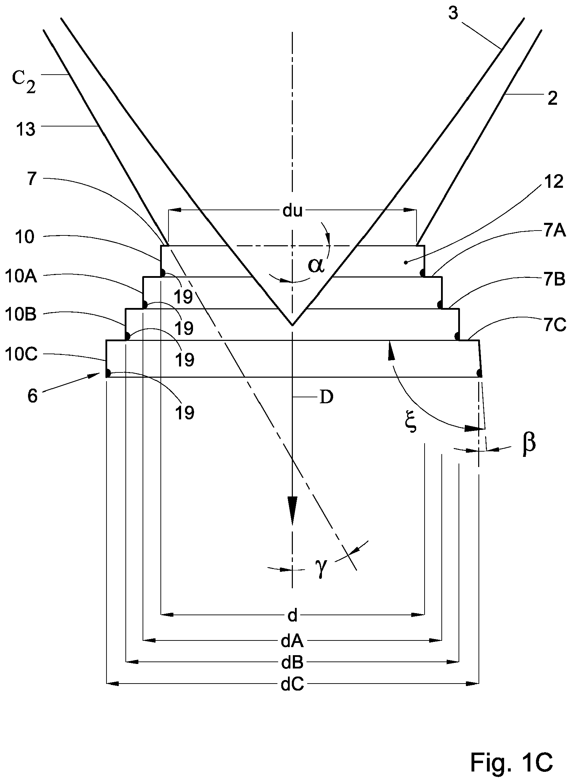

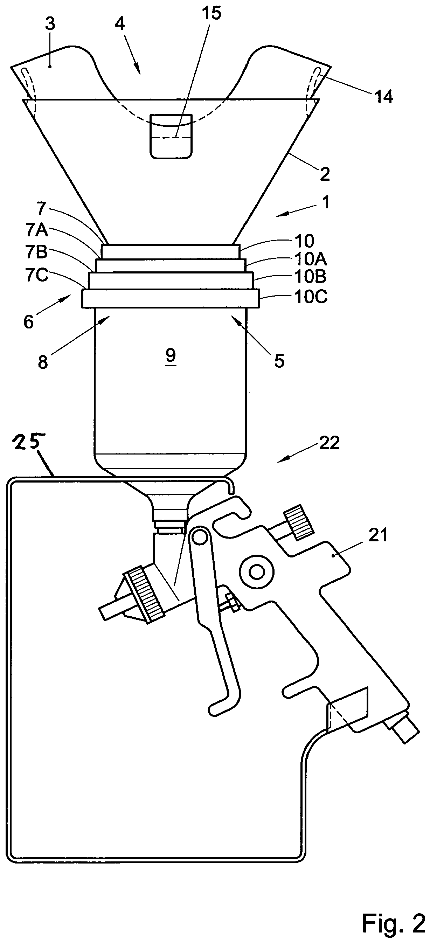

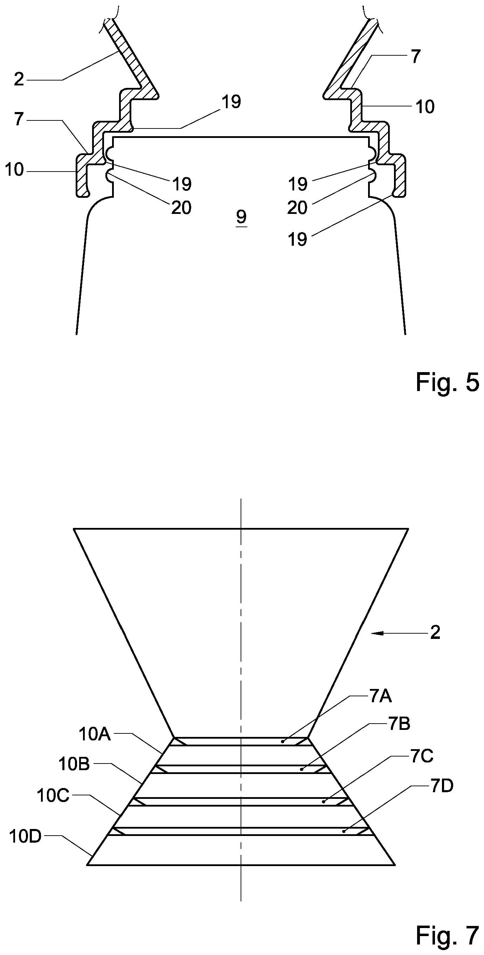

Adjacent the outlet opening 5, the holder 2 is provided with a lower edge 6. The lower edge comprises, *inter alia*, a supporting edge 7, which extends at an angle α to the feed-through direction D, for instance an approximately right angle α of 90° (see Fig. 1C), so that the supporting edge 7 can simply be used for bearing on an edge 8 of a receptacle 9 for the material to be strained. (See for instance Fig. 2 or 5). In Fig. 2, a second assembly 22 is shown of a receptacle 9 and a paint sprayer 21, on which the assembly 1 of the holder 2 with strainer 3 is placed. The receptacle 9 comprises, for instance, a paint cup 9 which is designed to be placed on the paint sprayer and to provide the paint sprayer 21 during use with paint.

Next to the supporting edge 7, the lower edge is provided with a collar edge 10 which extends at an angle ζ to the supporting edge 7. The collar edge 10 extends along the outside of the supporting edge 7, and is preferably approximately parallel to the feed-through direction D. In some cases, the collar edge 10 can extend at an angle, such as a relatively small angle β, to the feed-through direction D of the holder 2, and at a great angle ζ to the supporting edge 7. This small angle β can for instance be a releasing angle for releasing the holder 2 from a mold. The great angle ζ mentioned can for instance be approximately 90°, or slightly greater or less than 90°.

As can be seen in an enlargement of the lower edge 6, in one embodiment, the lower edge 6 is provided with several supporting edges 7, 7A, 7B, 7C and collar edges 10, 10A, 10B, 10C, while the diameters d, dA, dB, dC, of the respective collar edges 10, 10A, 10B, 10C increase outwards, viewed in feed-through direction D. Particular embodiments may have two, three, four, five, six, seven or more supporting edges 7, 7A, 7B, 7C and collar edges 10, 10A, 10B, 10C.

One embodiment, where the edge 6 has several supporting edges 7, 7A, 7B, 7C and collar edges 10, 10A, 10B, 10C, can have the advantage that a suitable supporting edge 7, 7A, 7B, 7C corresponding to the upper edge 8 of the receptacle 9 can be selected. The holder 2 with the several supporting edges 7, 7A, 7B, 7C and collar edges 10, 10A, 10B, 10C has the advantage that it is universally applicable, with one holder 2 linking up with different receptacles 9. One type of holder 2, for instance, can favourably link up with paint cups with different volumes. The holder 2 comprises a substantially frustoconical form C2. The lower edge 6 can also have an imaginary conical form, while the imaginary conical form is formed by an imaginary plane extending through the collar edges 10, 10A, 10B, 10C. The imaginary conical form is reversed with respect to the conical form of the holder 2, that is to say, increases outwards in feed-through direction D, and is truncated at the location of the truncation 12 of the conical form C2 of the holder 2.

The conical part 13 of the holder 2 between the inlet opening 4 and the truncation 12 has, for instance, a height h of a few centimetres, for instance between approximately two and approximately thirty centimetres, preferably between approximately three and approximately twenty centimetres. The lower edge 6, including the several supporting edges 7, 7A, 7B, 7C and the collar edges 10, 10A, 10B, 10C also has a height h2 of a few centimetres, for instance approximately one to approximately twenty centimetres, preferably approximately one to approximately 10 centimetres. Examples of the height h2 of the lower edge 6 are approximately two, three, four or five centimetres with the collar edges 10, 10A, 10B, 10C each having a height of, for instance, between approximately 0.4 and 3 centimetres. The angle γ of the conical form C2 above the truncation 12 can be chosen to be, for instance, between 30° and 70°. It may also be chosen depending on the conical form C1 of the strainer 3. Preferably, the conical form C2 of the inside of the conical part 13 and the conical form of the strainer 3 are approximately the same, so that the strainer 3 links up with the inside of the holder 2.

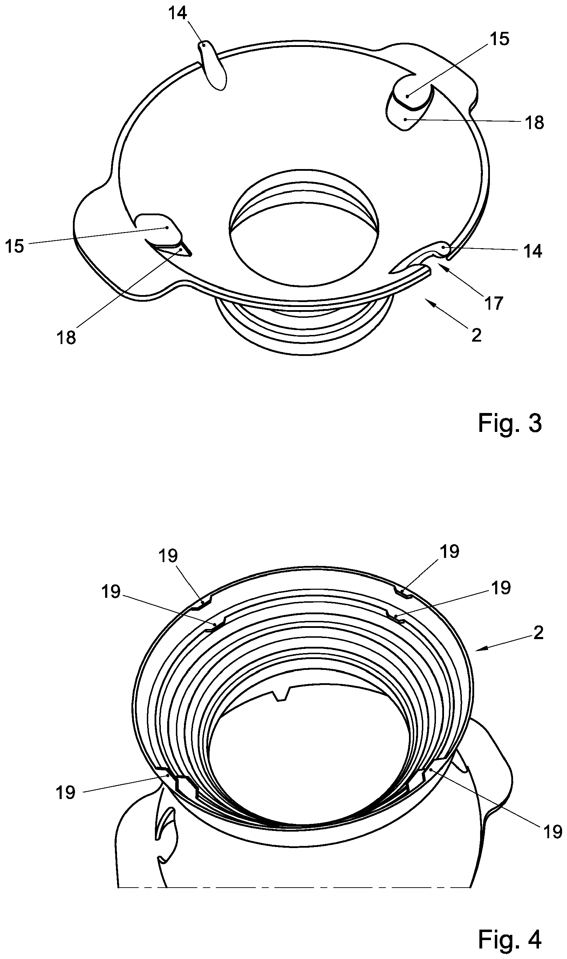

In one embodiment, the outlet opening 5 at the location of the truncation 12 has a diameter dᵤ of at least two centimetres, preferably at least three centimetres, but no greater than twenty centimetres. In this manner, a considerable part of the strainer 3 is suspended clear of the holder 2. The strained material flows clear of the holder 2 directly from the strainer 3 into the receptacle 9. Here, it is advantageous when the edge 6 of the holder 2 keeps the space under the strainer 3 clear. To that end, it is advantageous that the diameters d, dA, dB, dC of the supporting edges 7, 7A, 7B, 7C and the collar edges 10, 10A, 10B, 10C increase outwards.
In one embodiment, the holder 2 is provided with connecting elements 14, 15 for connecting the strainer 3 to the holder 2. The holder 2 may be provided, adjacent the inlet opening 4, with projecting arms 14 for cooperation with holes 16 of the strainer 3. In addition or instead thereof, the holder 2 can be provided with projections 15 at the inside of the holder 2 for engaging the upper edge of the strainer 3 or for instance a hole 16 of the strainer 3. In the example shown, two opposite projections 15 engage the upper edge of the strainer 3. In the example shown, (see for instance Fig. 3) the projections 15 are provided with an inclination proceeding obliquely inward relative to the inclination of the inside of the conical part C2 of the holder 2. As a result, the strainer 3 can simply be slid over the projections 15. When the upper edge of the strainer 3 has passed beyond the projections 15, the strainer 3 can be placed completely with the outside against the inside of the holder 2, so that the upper edge of the strainer 3 hooks behind the projections 15.

In one embodiment, the holder 2 is manufactured in one piece. The holder 2 may be manufactured through molding, for instance injection molding or rotational molding. The holder 2 is preferably designed such that it can be readily released from a mold. As can be seen in Fig. 3, one embodiment is provided with recesses 17, 18 geared to the arms 14 and/or projections 15, respectively. The recess 18 corresponding to each of the projections 15 is preferably located, in feed-through direction D, straight under the projections 15 and extends straight below the end of the respective projection 15 so that, in principle, the holder 2 can be released in a direction opposite to the feed-through direction D.

In Fig. 1A-C and Fig. 4, embodiments are shown where the holder 2 is provided at the inside of the lower edge 6 with engaging projections 19 for engaging an edge of the receptacle 9. These engaging projections 19 comprise at least one protrusion which is directed inwards. The engaging projections 19 can for instance give additional clamping force to the respective collar edges 10, to be clamped on the receptacle 9. When the edge 8 of the receptacle 9 is provided with a projection, a wire 20, a projecting edge or the like, the engaging projections 19 can hook behind this so that the holder 2 can be less easily knocked from the receptacle 9 (see Fig. 5). Then, the engaging projections 19 form a protection so that the holder 2 does not rapidly tilt from the holder 2. In one embodiment, the holder 2 is to be forced to some extent, for instance be forcibly tilted so that the engaging projections 19 are pressed out of position and the receptacle 9 can be taken from the holder 2.

In one embodiment, the holder 2, the strainer 3, the receptacle 9 and for instance a paint sprayer 21 (see Fig. 2) form a kit that can be composed as separate parts. The holder 2 and the strainer 3 together form a first assembly 1, and the receptacle 9 and the paint sprayer 21 together form a second assembly 22. One of the supporting edges 7, 7A, 7B, 7C of the holder 2 bears on an upper edge 8 of the receptacle 9. And in one embodiment, engaging projections 19 are provided which engage behind a wire 20 of the receptacle 9, so that the holder 2 remains in position on the receptacle 9. The diameter and the width of the respective supporting edge 7, 7A, 7B, 7C can be selected such that this overlaps the diameter of the upper edge 8 of the receptacle 9. Preferably, the holder 2, the strainer 3 and the receptacle 9 comprise substantially rotational forms which, in use, i.e. with the first assembly 1 placed on the second assembly 22, have a shared central axis, preferably equal to or parallel to the feed-through direction D and/or the rotational axis 11.

The receptacle 9 can be filled to a particular limit with the material to be strained. The filling limit may be determined by the upper edge 8, but could, in other embodiments, also be under this upper edge 8. When the assembly 1 is placed on the receptacle 9, it is advantageous when the bottom side of the strainer, for instance the lowest point 24, extends approximately at the same level or above the filling limit of the receptacle 9. This prevents the strainer 9 from being suspended in the paint during filling, in particular when the receptacle 9 is almost or completely filled. The strainer 3 may be designed such that when the strainer 3 is placed in the holder 2, the bottom side of the strainer 3 extends above or at approximately the same height as the bottom side of the lowest collar edge 10C of the holder 2.

In one embodiment, the strainer 3 is folded, before straining the material to be strained, from a flat form into a folded-out condition. Then, the strainer 3 is placed in the holder 2. Preferably, the strainer 3 is held in position by projections 15 and/or arms 14 of the holder 2. The upper edge of the strainer 3 is for instance moved along the projections 15 in the holder 2, while after the edge of the strainer 3 has passed the projections 15, the strainer can fold further outwards. After this, the strainer 3 bounces slightly upwards so that the upper edge of the strainer 3 hooks behind the projections 15.

When the strainer 3 is placed, the holder 2 is placed directly on the receptacle 9, with one of the supporting edges 7, 7A, 7B, 7C of the holder 2 bearing on the upper edge 8 of the receptacle 9, and one or several collar edges 10, 10A, 10B, 10C extending over the upper edge 8 of the receptacle 9, along the outside of the receptacle 9. In one embodiment, the holder 2, upon placement on the receptacle 9, is to be pressed further to some extent so that the engaging projections 19, designed at the inside and/or bottom side of the supporting edges 7, 7A, 7B, 7C (see Figs. 4, 5) are pressed outwards by the upper edge 8, in particular by a projection or wire 20 thereof. After the engaging projections 19 have passed the upper edge 8, or the projection or wire 20 thereof, they bounce back inwards and the holder 2 is, to some extent, secured relative to the receptacle 9. Preferably, the holder 2 with paint strainer 3 is placed on the receptacle 9 such that the bottom side of the paint strainer 3 extends above, or approximately at the same height of a filling limit or filling edge of the receptacle 9. The receptacle 9 may already have been attached to a paint sprayer 21 so that after the receptacle 9 is filled with the material to be strained and the holder 2 with strainer is taken from the receptacle 9, the paint sprayer 21 can be directly used, at least after the receptacle 9 has been closed off, if required. Optionally, during filling, a support 25 is used for supporting the sprayer 21 and/or the holder 2, for instance such that the user has both hands free for pouring paint into the assembly 1 of the strainer 2 and the holder 3.

The material to be strained comprises paint. Paint is also understood to include lacquer, ink or other coloring liquids, suitable for, for instance, spray painting or straining cans of paint for the house painter or for personal use.

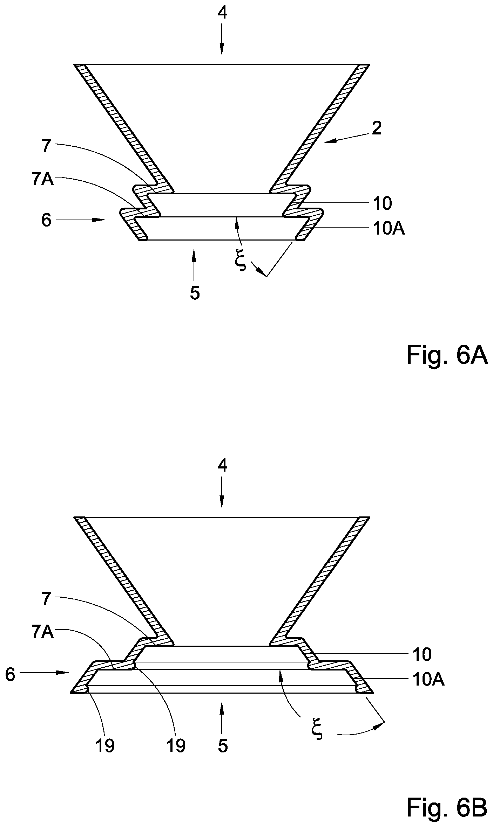

In Figs. 6A and 6B, by way of illustration, embodiments of holders 2 are shown. In Fig. 6A, the collar edge 10, 10A extends at an angle ζ relative to the supporting edge 7, 7A such that the collar edge 10, 10A is directed inwards to some extent. The angle ζ is for instance less than 90°, and greater than 45°, preferably greater than 60°. In the embodiment of Fig. 6B, the collar edge 10, 10A extends outwards, at an angle ζ which is greater than 90°, but less than 135°, preferably less than 120°. The collar edge 10, 10A needs not be restricted to a straight form, as shown in the Figures, but can for instance also have some degree of convexity, serration and/or structure.

In one embodiment, the or at least one of the collar
edges 10, 10A, 10B, 10C is provided with a screw thread, preferably at the inside, for instance such that the holder 2 can be screwed onto a receptacle 9. The screw thread can be provided, for instance, next to or instead of the engaging projections 19. To that end, the receptacle 9 can be provided with corresponding screw thread or projections.

In yet another embodiment, the one or several collar edges 10A-D are together of conical form, as shown in Fig. 7. Here, the corresponding one or several supporting edges 7A-D extend at the inner edge of the conical form.

In one embodiment, the holder 2 can also be of collapsible design. Here, the upper edge, i.e. at the inlet opening 4, and the lower edge, i.e. at the outlet opening 5, are folded together so that the holder 2 takes the form of a flat ring. Here, the holder can for instance be folded in and out concertina-wise.

The described variant and many comparable variants, as well as combinations thereof are understood to fall within the framework of the invention. Naturally, different aspects of different embodiments and/or combinations thereof can be combined and exchanged within the framework of the invention. There should thus be no limitation to the embodiments mentioned. The scope of the invention is only limited by the claims.

## Claims

1. A paintstrainer holder (2), which paintstrainer holder (2) is provided with an inlet opening (4) and an outlet opening (5), wherein a feed-through direction (D) extends from the inlet opening (4) to the outlet opening (5), wherein the paintstrainer holder (2) is provided, adjacent the outlet opening (5), with a lower edge (6), which lower edge (6) is provided with a supporting edge (7) at an angle (α) to the feed-through direction (D), which supporting edge (7) is designed for bearing, in use, on an edge (8) of a receptacle (9) for paint to be strained, **characterized in that** said lower edge (6) is also provided with a collar edge (10) extending away from the inlet opening (4) at an angle (ζ) to the supporting edge (7), and at the outside of the supporting edge (7), wherein the paintstrainer holder (2) substantially comprises a frustoconical form (C2), and, at the location of its truncation (12), merges into the lower edge (6).

2. A paintstrainer holder (2) according to claim 1, wherein said lower edge (6) is provided with several supporting edges (7) and collar edges (10), wherein the diameters of the collar edges (10) increase outwards, viewed in feed-through direction (D).

3. A paintstrainer holder (2) according to claim 1 or 2, wherein the outlet opening (5) at the location of the truncation (12) has a diameter (du) of at least two centimetres, but no greater than twenty centimetres.

4. A paintstrainer holder (2) according to any one of the preceding claims, provided with connecting elements (14, 15) for connecting a paintstrainer (3) to the paintstrainer holder (2).

5. A paintstrainer holder (2) according to any one of the preceding claims, wherein the paintstrainer holder (2) is provided, adjacent the inlet opening (4), with at least one projecting arm (14) for cooperation with holes (16) of a paintstrainer (3).

6. A paintstrainer holder (2) according to any one of the preceding claims, wherein the paintstrainer holder (2) is provided with at least one projection (15) at the inside of the paintstrainer holder (2) for engaging an edge of a paintstrainer (3).

7. A paintstrainer holder (2) according to any one of the preceding claims, wherein the paintstrainer holder (2) is manufactured in one piece, preferably molded.

8. A paintstrainer holder (2) according to any one of the preceding claims, wherein the paintstrainer holder (2) is provided, at the inside of the lower edge (6), with engaging projections (19) for engaging an edge (8) of a receptacle (9).

9. A kit provided with a paintstrainer holder (2) according to any one of the preceding claims, and a paintstrainer (3), wherein the form of the outside of the paintstrainer (3), at least in a condition of use, corresponds to the inside of the paintstrainer holder (2) for placing the paintstrainer (3) in the paintstrainer holder (2).

10. A kit according to claim 9, wherein the paintstrainer (3) and the paintstrainer holder (2) are formed correspondingly conically.

11. A kit according to claim 9 or 10, wherein the paintstrainer holder (2) and the paintstrainer (3) have corresponding connecting elements (14, 15, 16, 17, 18) for holding the paintstrainer (3) in place in the paintstrainer holder (2).

12. A kit according to any one of claims 9-11, provided with a paintstrainer holder (2) according to claim 4, and a paintstrainer (3), wherein the paintstrainer (3) is provided with a hole (16), so that in use the at least one arm (14) of the paintstrainer holder (2) projects through the hole (16).

13. A kit according to any one of claims 9-12, wherein the paintstrainer (3) is designed such that when the paintstrainer (3) is placed in the paintstrainer holder (2), the bottom side of the paintstrainer (3) extends above or at approximately the same height as the bottom side of the lowest collar edge (10) of the paintstrainer holder (2).

14. A kit according to any one of claims 9 - 13, provided with a receptacle (9) with a filling limit, wherein a supporting edge (7) of the paintstrainer holder (2) corresponds to an upper edge (8) of the receptacle (9) for bearing thereon, such that upon placement of the paintstrainer (3) in the paintstrainer holder (2) and the paintstrainer holder (2) on the receptacle (9), the bottom side of the paintstrainer (3) extends above the filling limit.

15. A kit according to claim 14, wherein the paintstrainer holder (2), the paintstrainer (3) and the receptacle (9) substantially comprise rotational forms, which in use have a shared central axis.

16. A kit according to claim 14 or 15, wherein the receptacle (9) comprises a paint cup (9) and a paintstrainer (3).

17. Use of a paintstrainer (3) for filling a receptacle (9) with paint to be strained,
wherein the paintstrainer (3) is placed in a paintstrainer holder (2) according to any one of the claims 1 to 8, and wherein the paintstrainer holder (2) is placed directly on the receptacle (9), wherein the supporting edge (7) of the paintstrainer holder (2) bears on an edge (8) of the receptacle (9), and the collar edge (10) extends over a part of the outside of the receptacle (9).

18. Use according to claim 17, wherein the paintstrainer holder (2) clamps on the receptacle (9) and/or parts of the paintstrainer holder (2) hook behind parts of the receptacle (9).

19. Use according to claim 17 or 18, wherein the receptacle (9) comprises a paint cup (9) which paint cup (9) is attached to a paint sprayer (21), wherein the paintstrainer holder (2) comprises a conical form (C2) and wherein the paintstrainer (3) comprises a conical form, wherein the paintstrainer holder (2) with paintstrainer (3) is placed directly on the paint cup (9) so that the bottom side of the paintstrainer (3) extends above or at approximately the same height of a filling edge of the cup (9).

## Patentansprüche

1. Farbfilterhalter (2), welcher Farbfilterhalter (2) mit einer Einlassöffnung (4) und einer Auslassöffnung (5) versehen ist, wobei eine Durchführrichtung (D) von der Einlassöffnung (4) zu der Auslassöffnung (5) verläuft, wobei der Farbfilterhalter (2) neben der Auslassöffnung (5) mit einem unteren Rand (6) versehen ist, welcher untere Rand (6) mit einem Stützrand (7) in einem Winkel (α) zu der Durchführrichtung (D) versehen ist, welcher Stützrand (7) konzipiert, um bei Verwendung, auf einem Rand (8) eines Behältnisses (9) für zu filternde Farbe zu ruhen, **dadurch gekennzeichnet, dass** der untere Rand (6) auch mit einem Kragenrand (10) versehen ist, der weg von der Einlassöffnung (4) in einem Winkel (ζ) zu dem Stützrand (7) und an der Außenseite des Stützrandes (7) verläuft, wobei der Farbfilterhalter (2) im Wesentlichen eine stumpfkegelige Form (C2) aufweist und an der Stelle seiner Abschneidung (12) in den unteren Rand (6) übergeht.

2. Farbfilterhalter (2) nach Anspruch 1, wobei der untere Rand (6) mit mehreren Stützrändern (7) und Kragenrändern (10) versehen ist, wobei die Durchmesser der Kragenränder (10), gesehen in Durchführrichtung (D), nach außen hin zunehmen.

3. Farbfilterhalter (2) nach Anspruch 1 oder 2, wobei die Auslassöffnung (5) an der Stelle der Abschneidung (12) einen Durchmesser (dᵤ) von mindestens zwei Zentimeter aber nicht größer als zwanzig Zentimeter hat.

4. Farbfilterhalter (2) nach einem der vorhergehenden Ansprüche, versehen mit Verbindungselementen (14, 15) zum Verbinden eines Farbfilters (3) mit dem Farbfilterhalter (2).

5. Farbfilterhalter (2) nach einem der vorhergehenden Ansprüche, wobei der Farbfilterhalter (2) neben der Einlassöffnung (4) mit mindestens einem vorstehenden Arm (14) zum Zusammenarbeiten mit Löchern (16) eines Farbfilters (3) versehen ist.

6. Farbfilterhalter (2) nach einem der vorhergehenden Ansprüche, wobei der Farbfilterhalter (2) mit mindestens einem Vorsprung (15) an der Innenseite des Farbfilterhalters (2) versehen ist, um in einen Rand eines Farbfilters (3) einzugreifen.

7. Farbfilterhalter (2) nach einem der vorhergehenden Ansprüche, wobei der Farbfilterhalter (2) aus einem Stück hergestellt, bevorzugt gegossen, ist.

8. Farbfilterhalter (4) nach einem der vorhergehenden Ansprüche, wobei der Farbfilterhalter (2) an der Innenseite des unteren Randes (6) mit eingreifenden Vorsprüngen (19) zum Eingreifen in einen Rand (8) eines Behältnisses (9) versehen ist.

9. Kit, bereitgestellt mit einem Farbfilterhalter (2) nach einem der vorhergehenden Ansprüche und einem Farbfilterhalter (3), wobei die Form der Außenseite des Farbfilterhalters, mindestens in einem Zustand der Verwendung, der Innenseite des Farbfilterhalters (2) entspricht, um den Farbfilter (3) in den Farbfilterhalter (2) zu Platzieren.

10. Kit nach Anspruch 9, wobei der Farbfilter (3) und der Farbfilterhalter (2) entsprechend konisch geformt sind.

11. Kit nach Anspruch 9 oder 10, wobei der Farbfilterhalter (2) und der Farbfilter (3) übereinstimmende Verbindungselemente (14, 15, 16, 17, 18) haben, um den Farbfilter (3) in dem Farbfilterhalter (2) festzuhalten.

12. Kit nach einem der Ansprüche 9-11, versehen mit einem Farbfilterhalter (2) nach Anspruch 4 und einem Farbfilter (3), wobei der Farbfilter (3) mit einem Loch (16) versehen ist, sodass, bei Verwendung, der mindestens eine Arm (14) des Farbfilterhalters (2) durch das Loch (16) hervorsteht.

13. Kit nach einem der Ansprüche 9-12, wobei der Farbfilter (3) so konzipiert ist, dass, wenn der Farbfilter (3) in den Farbfilterhalter (2) platziert wird, die Unterseite des Farbfilters (3) über oder in ungefähr derselben Höhe verläuft wie die Unterseite des untersten Kragenrandes (10) des Farbfilterhalters (2).

14. Kit nach einem der Ansprüche 9-13, versehen mit einem Behältnis (9) mit einer Füllgrenze, wobei ein Stützrand (7) des Farbfilterhalters (2) einem oberen Rand (8) des Behältnisses (9) entspricht, um darauf zu ruhen, sodass beim Platzieren des Farbfilters (3) in den Farbfilterhalter (2) und des Farbfilterhalters (2) auf das Behältnis (9) die Unterseite des Farbfilters (3) über der Füllgrenze verläuft.

15. Kit nach Anspruch 14, wobei der Farbfilterhalter (2), der Farbfilter (3) und das Behältnis (9) im Wesentlichen rotierende Formen haben, die, bei Verwendung, eine gemeinsame Mittelachse haben.

16. Kit nach Anspruch 14 oder 15, wobei das Behältnis (9) eine Farbtasse (9) und einen Farbfilter (3) umfasst.

17. Verwendung eines Farbfilters (3) zum Füllen eines Behältnisses (9) mit zu filternder Farbe,
wobei der Farbfilter (3) in einen Farbfilterhalter (2) nach einem der Ansprüche 1 bis 8 platziert wird,
wobei der Farbfilterhalter (2) direkt auf das Behältnis (9) platziert wird,
wobei der Stützrand (7) des Farbfilterhalters (2) auf einem Rand (8) des Behältnisses (9) ruht und der Kragenrand (10) über einen Teil der Außenseite des Behältnisses (9) verläuft.

18. Verwendung nach Anspruch 17, wobei der Farbfilterhalter (2) an dem Behältnis (9) und/oder Teilen des Farbfilterhalters (2) hinter Teilen des Behältnisses (9) klemmt.

19. Verwendung nach Anspruch 17 oder 18, wobei das Behältnis (9) eine Farbtasse (9) umfasst, welche Farbtasse (9) an einem Farbsprüher (21) befestigt ist, wobei der Farbfilterhalter (2) eine konische Form (C2) aufweist und wobei der Farbfilter (3) eine konische Form aufweist, wobei der Farbfilterhalter (2) mit dem Farbfilter (3) direkt auf die Farbtasse (9) platziert wird, sodass die Unterseite des Farbfilters (3) über oder in ungefähr derselben Höhe eines Füllrandes der Tasse (9) verläuft.

## Revendications

1. Support (2) de filtre à peinture, lequel support (2) de filtre à peinture est pourvu d'une ouverture d'entrée (4) et d'une ouverture de sortie (5), sachant qu'une direction de passage (D) s'étend de l'ouverture d'entrée (4) à l'ouverture de sortie (5), sachant que le support (2) de filtre à peinture est pourvu, de façon adjacente à l'ouverture de sortie (5), d'un bord inférieur (6), lequel bord inférieur (6) est doté d'un bord de support (7), sous un angle (α) par rapport à la direction de passage (D), lequel bord de support (7) est conçu pour reposer, lors de l'utilisation, sur un bord (8) d'un récipient (9) pour la peinture devant être filtrée, **caractérisé en ce que** ledit bord inférieur (6) est également doté d'un bord formant collet (10) s'étendant dans le sens opposé à l'ouverture d'entrée (4), sous un angle (ζ) par rapport au bord de support (7), et à l'extérieur du bord de support (7), sachant que le support (2) de filtre à peinture présente sensiblement une forme tronconique (C2) et, à l'emplacement de la troncature (12), se raccorde au bord inférieur (6).

2. Support (2) de filtre à peinture selon la revendication 1, dans lequel ledit bord inférieur (6) est doté de plusieurs bords de support (7) et de bords formant collets (10), les diamètres des bords formant collets (10) augmentant vers l'extérieur, vu dans la direction de passage (D).

3. Support (2) de filtre à peinture selon la revendication 1 ou 2, dans lequel l'ouverture de sortie (5), à l'emplacement de la troncature (12), présente un diamètre (dᵤ) d'au moins deux centimètres mais pas supérieur à vingt centimètres.

4. Support (2) de filtre à peinture selon l'une quelconque des revendications précédentes, pourvu d'éléments de raccordement (14, 15) destinés à raccorder un filtre à peinture (3) au support (2) de filtre à peinture.

5. Support (2) de filtre à peinture selon l'une quelconque des revendications précédentes, dans lequel le support (2) de filtre à peinture est pourvu, de façon adjacente à l'ouverture d'entrée (4), d'au moins un doigt en saillie (14) destiné à coopérer avec des trous (16) d'un filtre à peinture (3).

6. Support (2) de filtre à peinture selon l'une quelconque des revendications précédentes, dans lequel le support (2) de filtre à peinture est pourvu d'au moins d'une saillie (15) à l'intérieur du support (2) de filtre à peinture, destinée à entrer en prise avec un bord d'un filtre à peinture (3).

7. Support (2) de filtre à peinture selon l'une quelconque des revendications précédentes, dans lequel le support (2) de filtre à peinture est fabriqué d'une seule pièce, de préférence moulé.

8. Support (2) de filtre à peinture selon l'une quelconque des revendications précédentes, dans lequel le support (2) de filtre à peinture est pourvu, à l'intérieur du bord inférieur (6), de saillies d'accouplement (19) pour l'accouplement avec un bord (8) d'un récipient (9).

9. Equipement pourvu d'un support (2) de filtre à peinture selon l'une quelconque des revendications précédentes et d'un filtre à peinture (3), sachant que la forme de l'extérieur du filtre à peinture (3), au moins dans une condition d'utilisation, correspond à l'intérieur du support (2) de filtre à peinture pour mettre le filtre à peinture (3) en place dans le support (2) de filtre à peinture.

10. Equipement selon la revendication 9, dans lequel le filtre à peinture (3) et le support (2) de filtre à peinture sont formés de façon conique correspondante.

11. Equipement selon la revendication 9 ou 10, dans lequel le support (2) de filtre à peinture et le filtre à peinture (3) ont des éléments de raccordement (14, 15, 16, 17, 18) correspondants pour maintenir le filtre à peinture (3) en place dans le support (2) de filtre à peinture.

12. Equipement selon l'une quelconque des revendications 9 à 11, pourvu d'un support (2) de filtre à peinture selon la revendication 4 et d'un filtre à peinture (3), sachant que le filtre à peinture (3) est doté d'un trou (16), de sorte que lors de l'utilisation, le doigt (14), au nombre d'au moins un, du support (2) de filtre à peinture soit en saillie à travers le trou (16).

13. Equipement selon l'une quelconque des revendications 9 à 12, dans lequel le filtre à peinture (3) est conçu de manière telle que, lorsque le filtre à peinture (3) est mis en place dans le support (2) de filtre à peinture, la face inférieure du filtre à peinture (3) s'étende au-dessus de la face inférieure du bord formant collet (10) le plus bas du support (2) de filtre à peinture, ou à peu près à la même hauteur que cette face.

14. Equipement selon l'une quelconque des revendications 9 à 13, pourvu d'un récipient (9) avec une limite de remplissage, dans lequel un bord de support (7) du support (2) de filtre à peinture correspond à un bord supérieur (8) du récipient (9) afin de reposer sur celui-ci, de manière à ce que, suite à la mise en place du filtre à peinture (3) dans le support (2) de filtre à peinture et du support (2) de filtre à peinture sur le récipient (9), la face inférieure du filtre à peinture (3) s'étende au-dessus de la limite de remplissage.

15. Equipement selon la revendication 14, dans lequel le support (2) de filtre à peinture, le filtre à peinture (3) et le récipient (9) présentent des formes de révolution qui, lors de l'utilisation, ont un axe central commun.

16. Equipement selon la revendication 14 ou 15, dans lequel le récipient (9) se compose d'un réservoir à peinture (9) et d'un filtre à peinture (3).

17. Utilisation d'un filtre à peinture (3) pour le remplissage d'un récipient (9) avec de la peinture devant être filtrée, sachant que le filtre à peinture (3) est mis en place dans un support (2) de filtre à peinture selon l'une quelconque des revendications 1 à 8, et sachant que le support (2) de filtre à peinture est mis en place directement sur le récipient (9), sachant que le bord de support (7) du support (2) de filtre à peinture repose sur un bord (8) du récipient (9), et le bord formant collet (10) s'étend sur une partie de l'extérieur du récipient (9).

18. Utilisation selon la revendication 17, sachant que le support (2) de filtre à peinture est fixé par serrage au récipient (9) et/ou des parties du support (2) de filtre à peinture s'accrochent derrière des parties du récipient (9).

19. Utilisation selon la revendication 17 ou 18, sachant que le récipient (9) se compose d'un réservoir à peinture (9), lequel réservoir à peinture (9) est fixé à un pistolet à peinture (21), le support (2) de filtre à peinture présentant une forme conique (C2), et le filtre à peinture (3) présentant une forme conique, sachant que le support (2) de filtre à peinture, avec le filtre à peinture (3), est mis en place directement sur le réservoir à peinture (9), de manière à ce que la face inférieure du filtre à peinture (3) s'étende au-dessus d'un bord de remplissage du réservoir (9) ou à peu près à la même hauteur que celui-ci.
